# DEMANDE DE BREVET EUROPEEN

(11) **EP 1 837 241 A1**
(43) Date de publication de la demande: **26.09.2007**
(21) Numéro de dépôt: 07290349.5
(22) Date de dépôt: 22.03.2007
(51) Int. Cl.: B60R 13/02, G10K 11/168, B32B 5/32

(54) **Panneau de garnissage de véhicule automobile à absorption accoustique et à résistance à l'enfoncement améliorées**

(30) Priorité: 23.03.2006 FR 0602536
(71) Demandeur: CENTRE D'ETUDE ET RECHERCHE POUR L'AUTOMOBILE ( CERA), 51100 Reims (FR)
(72) Inventeur: Brillon, Eric, 51140 Treslon (FR); Lemaire, Dominique, 08190 Villiers devant le Thour (FR)
(74) Mandataire: Sayettat, Julien Christian

(57) **Abrégé**

L'invention concerne un panneau (1) de garnissage de véhicule automobile, ledit panneau comprenant, empilés l'un sur l'autre, selon une direction allant de sa face d'envers (2) vers sa face d'endroit (3), et associés successivement l'un à l'autre :
• une structure rigide (4),
• au moins un élément d'absorption acoustique (5) poreux et résistant à l'enfoncement,
• une coque d'aspect (6) poreuse,

ladite coque d'aspect présentant un résistance au passage de l'air supérieure à celle dudit élément d'absorption. L'invention concerne également un procédé de réalisation d'un tel panneau.

## Description

L'invention concerne un panneau de garnissage de véhicule automobile et un procédé de réalisation d'un tel panneau.

On connaît un panneau de garnissage de véhicule automobile, tel qu'une tablette de recouvrement des bagages, ledit panneau comprenant, empilés l'un sur l'autre, selon une direction allant de sa face d'envers vers sa face d'endroit, et associés successivement l'un à l'autre :
- une structure rigide, notamment à base de polyuréthanne,
- une coque d'aspect, notamment à base de non tissé ou d'aiguilleté.

Afin de réaliser une absorption acoustique des bruits émis en regard de la face d'envers du panneau, il peut être prévu que l'envers de la structure soit revêtu d'une couche poreuse, notamment à base de feutre.

Une telle couche présente une faible résistance à l'enfoncement et un aspect pouvant être peu esthétique, ces caractéristiques pouvant être d'importance secondaire dans la mesure où la face d'envers du panneau n'est pas destinée à être vue, ou seulement dans des circonstances particulières, par exemple lors de l'accès au compartiment à bagages dans le cas d'une tablette.

Si l'on souhaite réaliser une absorption acoustique des bruits émis en regard de la face d'endroit du panneau, c'est à dire les bruits de l'habitacle, il est difficile d'utiliser une telle couche. En effet, l'aspect esthétique s'avère primordial et il est généralement demandé que la résistance du panneau à l'enfoncement soit importante sur sa face d'aspect, ceci pour éviter les défauts de marquage. En outre, la coque d'aspect, même dans le cas où elle est poreuse, ne suffit pas, du fait de sa faible épaisseur, à assurer une bonne absorption acoustique.

L'invention a pour but de proposer un panneau dont la face d'aspect présente une esthétique et des propriétés d'absorption acoustique optimales, tout en offrant une résistance importante à l'enfoncement.

A cet effet, et selon un premier aspect, l'invention propose un panneau de garnissage de véhicule automobile, ledit panneau comprenant, empilés l'un sur l'autre, selon une direction allant de sa face d'envers vers sa face d'endroit, et associés successivement l'un à l'autre :
- une structure rigide,
- au moins un élément d'absorption acoustique poreux et résistant à l'enfoncement,
- une coque d'aspect poreuse,
ladite coque d'aspect présentant une résistance au passage de l'air supérieure à celle dudit élément d'absorption.

Un tel agencement permet de disposer d'une face d'aspect esthétique, formée par la coque d'aspect, et des propriétés d'absorption acoustique optimales, du fait de la pénétration des ondes sonores dans l'élément d'absorption, tout en offrant une bonne résistance à l'enfoncement.

Selon un deuxième aspect, l'invention propose un procédé de réalisation d'un tel panneau.

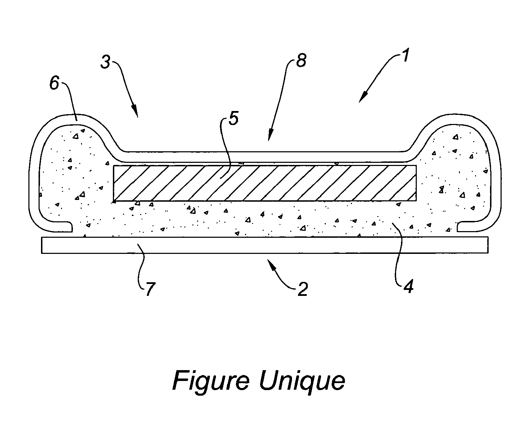

D'autres particularités et avantages de l'invention apparaîtront dans la description qui suit, faite en référence à la figure jointe qui est une représentation schématique en coupe d'un panneau selon un mode de réalisation de l'invention.

En référence à la figure, on décrit à présent un panneau 1 de garnissage de véhicule automobile, ledit panneau comprenant, empilés l'un sur l'autre, selon une direction allant de sa face d'envers 2 vers sa face d'endroit 3, et associés successivement l'un à l'autre :
- une structure rigide 4, par exemple à base de polyuréthanne ou de matière plastique injectée,
- un élément d'absorption acoustique 5 poreux et résistant à l'enfoncement,
- une coque d'aspect 6 poreuse, par exemple à base de non tissé ou d'aiguilleté,
ladite coque d'aspect présentant un résistance au passage de l'air supérieure à celle dudit élément d'absorption.

Selon une réalisation, l'élément d'absorption 5 présente une résistance à l'enfoncement telle qu'une charge de sensiblement 3 daN appliquée pendant 15 minutes sur ledit élément par l'intermédiaire d'un disque répartiteur de 15 mm de diamètre ne crée pas de défaut résiduel de marquage.

Selon une réalisation, la coque d'aspect 6 présente une résistance au passage de l'air comprise entre 1000 et 2000 N.s.m⁻³ et l'élément d'absorption 5 présente une résistance au passage de l'air inférieure à 800 N.s.m⁻³, par exemple de l'ordre de 500 N.s.m⁻³.

Selon la réalisation représentée, l'élément d'absorption 5 est sous forme de couche occupant la zone non périphérique du panneau 1.

En variante non représentée, il peut être prévu de disposer plusieurs éléments d'absorption 5, ceci pour tenir compte de contraintes liées à la géométrie du panneau 1, notamment dans des zones non développables.

Selon une réalisation, l'élément d'absorption 5 est à base de feutre imprégné de latex, par exemple selon la technique dite « plein bain ». En variante, il peut être prévu que l'élément 5 soit à base de mousse rigide à cellules ouvertes.

Selon une réalisation, l'élément d'absorption 5 présente une épaisseur comprise entre 3 et 15 mm, notamment entre 5 et 10 mm permettant de lui conférer de bonnes propriétés d'absorption acoustique.

Selon la réalisation représentée, le panneau 1 comprend en outre une coque d'envers 7, par exemple à base de matériau fibreux tel qu'un non tissé ou un aiguilleté, associée à la structure 4, ceci notamment pour des considérations esthétiques.

Selon la réalisation représentée, le panneau 1 comprend une zone 8 formant plumier et des moyens d'association, non représentés, destinés à coopérer avec des moyens complémentaires prévus dans le compartiment à bagages du véhicule automobile. Le panneau forme alors tablette de recouvrement de bagages, la coque d'aspect 6 étant destinée à être disposée en regard de l'habitacle dudit véhicule.

Selon une réalisation non représentée, le panneau 1 comprend une zone formant accoudoir et des moyens d'association destinés à coopérer avec des moyens complémentaires prévus sur la portière du véhicule automobile, la coque d'aspect 6 étant destinée à être disposée en regard de l'habitacle dudit véhicule.

On décrit à présent un procédé de réalisation d'un panneau 1, ledit procédé comprenant les étapes suivantes :
- prévoir une coque d'aspect 6 poreuse et une coque d'envers 7,
- associer un élément d'absorption 5, de porosité plus importante que celle de ladite coque d'aspect et résistante à l'enfoncement, en envers de ladite coque d'aspect, par exemple par collage,
- revêtir la cuve d'un moule avec ladite coque d'aspect associée audit élément d'absorption, et son couvercle avec ladite coque d'envers,
- injecter un mélange précurseur de mousse rigide en refermant le moule, de sorte que ladite mousse se déploie dans l'espace délimité, au moins en partie, par ladite coque d'envers et ledit élément d'absorption en les surmoulant, afin de former la structure 4 dudit panneau,
- démouler le panneau 1 obtenu.

## Revendications

1. Panneau (1) de garnissage de véhicule automobile, ledit panneau comprenant, empilés l'un sur l'autre, selon une direction allant de sa face d'envers (2) vers sa face d'endroit (3), et associés successivement l'un à l'autre :
• une structure rigide (4),
• au moins un élément d'absorption acoustique (5) poreux et résistant à l'enfoncement,
• une coque d'aspect (6) poreuse,
ladite coque d'aspect présentant un résistance au passage de l'air supérieure à celle dudit élément d'absorption.

2. Panneau (1) selon la revendication 1, l'élément d'absorption (5) présentant une résistance à l'enfoncement telle qu'une charge de sensiblement 3 daN appliquée pendant 15 minutes sur ledit élément par l'intermédiaire d'un disque répartiteur de 15 mm de diamètre ne crée pas de défaut résiduel de marquage.

3. Panneau (1) selon la revendication 1 ou 2, la coque d'aspect (6) présentant une résistance au passage de l'air comprise entre 1000 et 2000 N.s.m⁻³ et l'élément d'absorption (5) présentant une résistance au passage de l'air inférieure à 800 N.s.m⁻³.

4. Panneau (1) selon l'une quelconque des revendications 1 à 3, l'élément d'absorption (5) étant sous forme de couche.

5. Panneau (1) selon la revendication 4, l'élément d'absorption (5) étant à base de feutre imprégné de latex.

6. Panneau (1) selon la revendication 4 ou 5, l'élément d'absorption (5) présentant une épaisseur comprise entre 3 et 15 mm, notamment entre 5 et 10 mm.

7. Panneau (1) selon l'une quelconque des revendications 1 à 6, ledit panneau comprenant en outre une coque d'envers (7) associée à la structure (4).

8. Panneau (1) selon l'une quelconque des revendications 1 à 7, ledit panneau comprenant une zone formant plumier (8) et des moyens d'association destinés à coopérer avec des moyens complémentaires prévus dans le compartiment à bagages du véhicule automobile, de sorte à former tablette de recouvrement de bagages, la coque d'aspect (6) étant destinée à être disposée en regard de l'habitacle dudit véhicule.

9. Panneau (1) selon l'une quelconque des revendications 1 à 7, ledit panneau comprenant une zone formant accoudoir et des moyens d'association destinés à coopérer avec des moyens complémentaires prévus sur la portière du véhicule automobile, la coque d'aspect (6) étant destinée à être disposée en regard de l'habitacle dudit véhicule.

10. Procédé de réalisation d'un panneau (1) selon l'une quelconque des revendications 7 à 9, ledit procédé comprenant les étapes suivantes :
• prévoir une coque d'aspect (6) poreuse et une coque d'envers (7),
• associer un élément d'absorption (5), de porosité plus importante que celle de ladite coque d'aspect et résistante à l'enfoncement, en envers de ladite coque d'aspect,
• revêtir la cuve d'un moule avec ladite coque d'aspect associée audit élément d'absorption, et son couvercle avec ladite coque d'envers,
• injecter un mélange précurseur de mousse rigide en refermant le moule, de sorte que ladite mousse se déploie dans l'espace délimité, au moins en partie, par ladite coque d'envers et ledit élément d'absorption en les surmoulant, afin de former la structure (4) dudit panneau,
• démouler le panneau (1) obtenu.
